# EUROPEAN PATENT APPLICATION

(11) **EP 4 250 454 A1**
(43) Date of publication of application: **27.09.2023**
(21) Application number: 22880100.7
(22) Date of filing: 20.09.2022
(51) Int. Cl.: H01M 50/244, H01M 50/258, H01M 50/289, H01M 50/209, H01M 50/24

(54) **BATTERY PACK AND VEHICLE**

(30) Priority: 13.10.2021 CN 202122462263 U
(71) Applicant: Contemporary Amperex Technology Co., Limited, Ningde, Fujian 352100 (CN)
(72) Inventor: YU, Lei, Ningde, Fujian 352100 (CN); CHEN, Weihua, Ningde, Fujian 352100 (CN)
(74) Representative: von Tietzen und Hennig, Nikolaus
(86) International application number: PCT/CN2022/119804
(87) International publication number: WO 2023/061160

(57) **Abstract**

This application relates to a battery pack (10) and a vehicle. A battery pack (10) is disclosed, including a box (110) and a cell module (120). The box (110) contains a cavity (1102) with an opening (1101) on one side. The cell module (120) is accommodated in the cavity (1102). A plurality of limiting grooves (111) are spaced apart on an inner sidewall of the cavity (1102). Convex ribs (121) in one-to-one correspondence with and in fit with the limiting grooves (111) are disposed on an outer sidewall of the cell module (120). A potting clearance (1103) that communicates with the opening (1101) is defined by a part of the inner sidewall of the cavity (1102) and a part of the outer sidewall of the cell module (120), where the part of the inner sidewall of the cavity is configured to avoid the limiting grooves (111), and the part of the outer sidewall of the cell module is configured to avoid the convex ribs (121).

## Description

### CROSS-REFERENCE TO RELATED APPLICATIONS

This application claims priority to Chinese Patent Application No. 202122462263.2, filed on October 13, 2021 and entitled "BATTERY PACK AND VEHICLE", which is incorporated herein by reference in its entirety.

### TECHNICAL FIELD

This application relates to the technical field of batteries, and in particular, to a battery pack and a vehicle.

### BACKGROUND

An electric vehicle is powered by a battery instead of fuel to achieve zero emission and low noise, and is an important means to solve energy and environmental problems. In the prior art, the electric vehicle is powered by a cell module of a battery pack. The cell module is fitted into a box of the battery pack, and then the battery pack is mounted as a whole into the electric vehicle, so that the cell module provides electricity to the electric vehicle.

However, it is difficult to perform a potting operation between the cell module and the box.

### SUMMARY

In view of the situation above, it is necessary to provide a battery pack and a vehicle to solve the problem that a glue holding space is lacking between a cell module and a box.

According to one aspect of this application, a battery pack is provided, including a box and a cell module. The box contains a cavity with an opening on one side. The cell module is accommodated in the cavity. A plurality of limiting grooves are spaced apart on an inner sidewall of the cavity. Convex ribs in one-to-one correspondence with and in fit with the limiting grooves are disposed on an outer sidewall of the cell module. A potting clearance that communicates with the opening is defined by a part of the inner sidewall of the cavity and a part of the outer sidewall of the cell module, where the part of the inner sidewall of the cavity is configured to avoid the limiting grooves, and the part of the outer sidewall of the cell module is configured to avoid the convex ribs.

In the technical solution according to an embodiment of this application, the cell module is accommodated in the cavity, so that the cell module is in fit with the box in a concave-convex manner. In this way, the cell module can be elementarily positioned in the cavity to elementarily form a potting clearance between the outer sidewall of the cell module and the inner sidewall of the cavity. Therefore, it is convenient to pour a glue into the potting clearance, without being prone to overflow of glue. Further, it is convenient to form, in the potting clearance, a cushion glue layer bonded between the outer sidewall of the cell module and the inner sidewall of the cavity. The cushion glue layer protects the cell module in the box.

In an embodiment, the inner sidewall of the cavity includes at least two groups of sidewalls opposite to each other. The limiting groove is made on at least one group of sidewalls opposite to each other. In this way, at least one couple of opposite ends of the cell module is in concave-convex fit with the box, so that the cell module can be positioned and fixed in the box more snugly, and it is convenient to pour a glue into the potting clearance.

In an embodiment, a width of the potting clearance is 3 to 5 millimeters (mm). In this way, it is ensured that the potting clearance between the outer sidewall of the cell module and the inner sidewall of the cavity is large enough to facilitate the potting operation, without being prone to overflow of glue.

In an embodiment, the inner sidewall of the cavity includes a first sidewall and a second sidewall disposed opposite to each other along a first direction. A plurality of the limiting grooves are made on the first sidewall and the second sidewall separately and spaced apart along a second direction. A plurality of the convex ribs spaced apart are correspondingly disposed on two opposite sides of the cell module separately. The first direction and the second direction are perpendicular to each other and both parallel to a plane in which the opening is located. In this way, the cell module is in concave-convex fit with the box more snugly, and the cell module is more tightly restricted from moving along the second direction and the first direction.

In an embodiment, at least one first sealant strip is disposed on two sides of the cell module along the first direction separately. Each first sealant strip is located on one side of a corresponding convex rib along the second direction. This ensures a tight fit between the convex rib and the corresponding limiting groove, and prevents the glue from overflowing from a fit clearance between the convex rib and the corresponding limiting groove during a potting operation.

In an embodiment, two first sealant strips are disposed on the two sides of the cell module along the first direction separately. Among a plurality of convex ribs on a same side, a first sealant strip is disposed on one side of each of two convex ribs that are located outermost along the second direction, and the side of one of the two convex ribs is away from the side of the other convex rib. In this way, all the convex ribs are in tighter fit with the corresponding limiting grooves, and the glue is more reliably prevented from overflowing from the fit clearance between the convex rib and the corresponding limiting groove during a potting operation.

In an embodiment, a plurality of limiting convex strip groups are disposed on the inner sidewall of the cavity. Two limiting convex strips in each group and the inner sidewall of the cavity define the limiting groove. The limiting groove formed between the two limiting convex strips of the corresponding limiting convex strip group is in concave-convex fit with the corresponding convex rib, thereby positioning and fixing the cell module in the cavity.

In an embodiment, the box includes a bottom plate opposite to the opening. Second sealant strips located between the bottom plate and the limiting groove and arranged along a second direction are disposed at two ends of the bottom plate along a first direction. This ensures a firmer fit to be formed between the cell module and the box. In addition, if the glue is poured in from a space between the limiting convex strips corresponding to two adjacent limiting grooves among a plurality of limiting grooves on the same side, the second sealant strip can prevent the glue from overflowing from the bottom of the cell module.

In an embodiment, a width of the second sealant strip along the first direction is greater than a width of the potting clearance. The second sealant strips can reliably prevent the glue from overflowing from a gap between the cell module and the box along the first direction.

According to another aspect of this application, a vehicle is provided, including the battery pack described above.

### BRIEF DESCRIPTION OF DRAWINGS

By reading the following detailed description of exemplary embodiments, a person of ordinary skill in the art becomes clearly aware of various other advantages and benefits. Further, in order to more clearly describe and illustrate embodiments and/or examples of the inventions disclosed herein, reference may be made to one or more of the drawings. Additional details or examples used to describe the drawings are not to be considered as any limitation on the scope of any of the disclosed invention, the currently described embodiment and/or example, or currently understood preferred implementations of the invention.
FIG. 1 is a schematic diagram of a partial structure of a battery pack according to one or more embodiments;
FIG. 2 is a schematic structural diagram of a box according to one or more embodiments;
FIG. 3 is a schematic structural diagram of a cell module according to one or more embodiments;
FIG. 4 is a schematic structural diagram of a box according to one or more embodiments;
FIG. 5 is a schematic structural diagram of a first side plate of a cell module according to one or more embodiments;
FIG. 6 is a schematic structural diagram of a positioning groove on a first side plate of a cell module and a box according to one or more embodiments;
FIG 7 is a close-up view of a part A shown in FIG. 6;
FIG. 8 is a schematic diagram of a process by which a first sealant strip shown in FIG. 7 abuts on a limiting convex strip along a first direction; and
FIG 9 is a close-up view of a part B shown in FIG. 4.

List of reference numerals: 10. battery pack; 110. box; 1101. opening; 1102. cavity; 1103. potting clearance; 111. limiting groove; 112. limiting convex strip; 113. bottom plate; 114. second sealant strip; 115. first sidewall; 116. second sidewall; 120. cell module; 121. rib; 122. first sealant strip; 123. first side plate.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, in order to reduce environmental pollution caused by gasoline and the like, batteries are widely used in vehicles to power the vehicles. To meet high power requirements of a vehicle, a battery pack is generally used as a power source of the vehicle. The battery pack includes a cell module and a box configure to accommodate the cell module. The cell module is mounted inside the box.

The inventor hereof has noticed that, after the cell module is mounted inside the box, the cell module is usually loaded into the box by being in clearance fit with the box, resulting in a lack of a glue holding space between the cell module and the box, and making it difficult to carry out a potting operation and difficult to achieve the purpose of protecting the cell module by using a potting glue. The glue is prone to overflow during the potting operation between the cell module and the box. In order to prevent overflow, a removable glue retaining strip is usually affixed to an overflow position. However, the glue retaining strip is prone to fail and fall off over time, and the overflow phenomenon persists. The overflowing glue needs to be cleared. The operation of clearing glue is difficult, thereby increasing the downtime and labor cost and delaying the production.

To alleviate the problems of overflow and fragile bonding of the glue retaining strip, the inventor hereof has carried out studies and found that the problem of a lack of a glue holding space in a narrow potting structure can be solved by reserving a potting clearance between the cell module and the box.

In view of the situation above, the inventor has designed a cell module and a box after in-depth research. The cell module is in concave-convex fit with the box, and a potting clearance is formed between an outer circumference of the cell module and an inner circumference of the box to facilitate a potting operation.

In such cell module and box, the cell module is in concave-convex fit with the box, so that the cell module can be elementarily positioned in the box, and the potting clearance is also elementarily formed between the outer circumference of the cell module and the inner circumference of the box, making it convenient to pour a glue into the potting clearance. In addition, the potting clearance is enough between the outer circumference of the cell module and the inner circumference of the box, thereby well avoiding overflow of glue.

The battery pack disclosed in some embodiments of this application is applicable to, but not limited to, electrical devices such as a vehicle, watercraft, or aircraft. A power supply system of the electrical device may be formed by using the battery pack disclosed in this application and the like, so as to improve the stability and longevity of the battery pack.

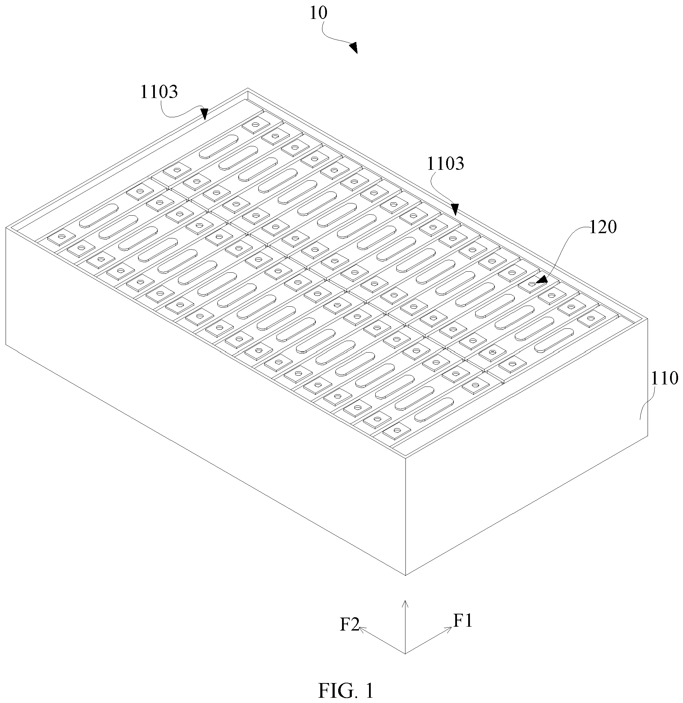

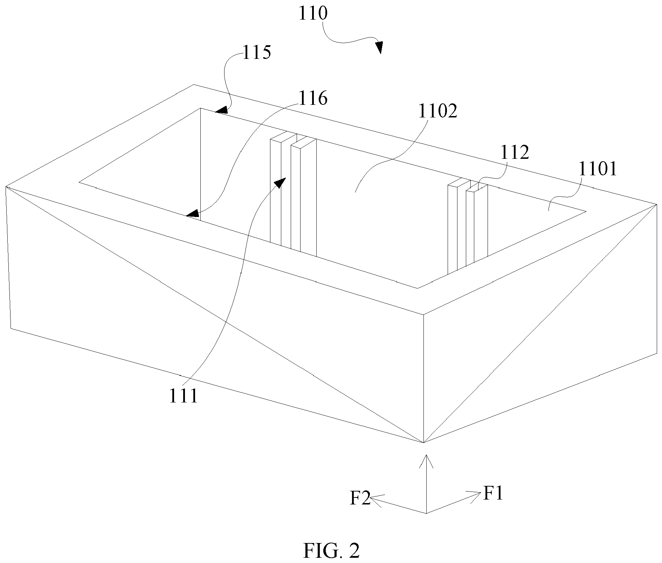

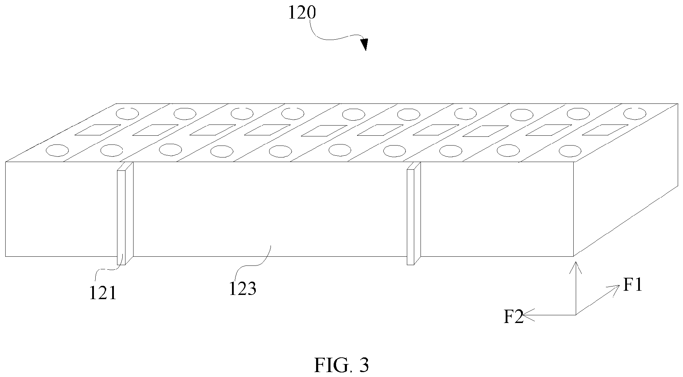

FIG. 1 is a schematic diagram of a partial structure of a battery pack 10 according to an embodiment of this application; FIG. 2 is a schematic structural diagram of a box 110 according to an embodiment of this application; and FIG. 3 is a schematic structural diagram of a cell module 120 according to an embodiment of this application.

Referring to FIG. 1, a battery pack 10 according to an embodiment of this application includes a box 110 and a cell module 120.

Referring to FIG. 2 together, the box 110 contains a cavity 1102 with an opening 1101 on one side. The opening 1101 is made at the top of the cavity 1102. Generally, the box 110 is placed along a gravity direction of the box 110, with the top of the cavity 1102 being an upper end of the cavity 1102, and the bottom of the cavity 1102 being a lower end of the cavity 1102. In this way, the opening 1101 is oriented upward, thereby making it convenient for an operator to put the cell module 120 through the opening 1101 into the cavity 1102.

Referring to FIG. 1, FIG. 2, and FIG. 3, the cell module 120 is accommodated in the cavity 1102. A plurality of limiting grooves 111 are spaced apart on an inner sidewall of the cavity 1102. Convex ribs 121 in one-to-one correspondence with and in fit with the limiting grooves 111 are disposed on an outer sidewall of the cell module 120. The limiting grooves and the convex ribs cause the cell module 120 to be in concave-convex fit with the box 110, restrict the movement of the cell module 120, and substantially prevent the cell module 120 from moving relative to the box 110.

A potting clearance 1103 that communicates with the opening 1101 is defined by a part of the inner sidewall of the cavity 1102 and a part of the outer sidewall of the cell module 120, where the part of the inner sidewall of the cavity is configured to avoid the limiting grooves 111, and the part of the outer sidewall of the cell module is configured to avoid the convex ribs 121. The cell module 120 is accommodated in the cavity 1102. A glue can be poured into the potting clearance 1103 through the opening 1101. The cell module 120 is in concave-convex fit with the box 110, and the cell module 120 in the cavity 1102 is substantially prevented from moving relative to the box 110. In this way, the cell module 120 is elementarily positioned in the cavity 1102 to elementarily form a potting clearance 1103 between the outer sidewall of the cell module 120 and the inner sidewall of the cavity 1102. Therefore, it is convenient to pour a glue into the potting clearance 1103, without being prone to overflow of glue. Further, it is convenient to form, in the potting clearance 1103, a cushion glue layer bonded between the outer sidewall of the cell module 120 and the inner sidewall of the cavity 1102. The cushion glue layer protects the cell module 120 in the box 110.

In some embodiments of this application, referring to FIG. 2, the inner sidewall of the cavity 1102 includes at least two groups of sidewalls opposite to each other. The limiting groove 111 is made on at least one group of sidewalls opposite to each other.

Understandably, the inner sidewall of the cavity 1102 includes two sidewalls opposite to each other along the first direction F 1. The inner sidewall of the cavity 1102 may further include two sidewalls opposite to each other along the second direction F2. The first direction F1 and the second directions F2 are perpendicular to each other and both parallel to a plane in which the opening 1101 is located. Limiting grooves 111 are made on the two sidewalls opposite to each other along the first direction F1, and/or limiting grooves 111 are made on the two sidewalls opposite to each other along the second direction F2.

With the limiting grooves 111 made on at least one group of sidewalls opposite to each other, at least one couple of opposite ends of the cell module 120 is in concave-convex fit with the box 110, so that the cell module 120 can be positioned and fixed in the box 110 more snugly, and it is convenient to pour a glue into the potting clearance 1103.

In some embodiments of this application, a width of the potting clearance 1103 is 3 to 5 millimeters (mm).

In other words, the potting clearance 1103 formed between the outer sidewall of the cell module 120 and the inner sidewall of the cavity 1102 is 3 to 5 millimeters (mm).

The potting clearance 1103 is formed between the outer sidewall of the cell module 120 and the inner sidewall of the cavity 1102, and the potting clearance 1103 avoids interference in the entire fit between the limiting groove 111 and the convex rib 121. When the cell module 120 is accommodated in the cavity 1102, the outer sidewall of the cell module 120 is disposed opposite to the inner sidewall of the cavity 1102. The formed potting clearance 1103 is 3 to 5 millimeters (mm) in width, and ensures that the potting clearance 1103 between the outer sidewall of the cell module 120 and the inner sidewall of the cavity 1102 is large enough to facilitate the potting operation, without being prone to overflow of glue.

In some embodiments, the potting clearance 1103 formed between the outer sidewall of the cell module 120 and the inner sidewall of the cavity 1102 is 4 millimeters (mm).

The potting clearance 1103 is large enough, thereby facilitating the potting operation, without being prone to overflow of glue.

In some embodiments of this application, still referring to FIG. 2 and FIG. 3, the inner sidewall of the cavity 1102 includes a first sidewall 115 and a second sidewall 116 disposed opposite to each other along a first direction F1. A plurality of the limiting grooves 111 are made on the first sidewall 115 and the second sidewall 116 separately and spaced apart along a second direction F2. A plurality of the convex ribs 121 spaced apart are correspondingly disposed on two opposite sides of the cell module 120 separately.

Still referring to FIG. 2 and FIG. 3, the limiting grooves 111 are disposed on the inner sidewall of the cavity 1102. The convex ribs 121 are disposed on the outer sidewall of the cell module 120. In this way, at the same-side ends of the cell module and the box along the first direction F1, the cell module 120 is in concave-convex fit with the box 110 by use of the convex ribs 121 and the limiting grooves 111. Therefore, the cell module 120 is positioned between the two ends of the box 110 along the first direction F1, so as to restrict the cell module 120 from moving along the first direction F1. In addition, the convex ribs 121 protrude beyond the cell module 120 along the first direction F1, the convex ribs 121 can be made to abut on the sidewall of the corresponding limiting groove 111 along the second direction F2, thereby restricting the cell module 120 from moving along the second direction F2.

As shown in FIG. 2 and FIG. 3, the first direction F1 is a front-rear direction, and the second direction F2 is a left-right direction. To be specific, a plurality of limiting grooves 111 spaced apart along the left-right direction are made on the inner side at a front end and a rear end of the box 110 separately, and a plurality of convex ribs 121 spaced apart along the left-right direction are disposed on the outer side at a front end and a rear end of the cell module 120 separately. The movement of the cell module 120 along the first direction F1 and the second direction F2 can be restricted by means of the concave-convex fit between the convex rib 121 and the limiting groove 111. The first direction F1 and the second direction F2 are perpendicular to each other and both parallel to the plane in which the opening 1101 is located. In this way, the cell module 120 can be elementarily positioned in the cavity 1102. In the first direction F1 and the second direction F2, the cell module 120 is prevented from moving relative to the box 110, thereby facilitating the potting operation performed between the outer sidewall of the cell module 120 and the inner sidewall of the cavity 1102. In addition, the cell module 120 is placed at the bottom of the box 110. Generally, the box 110 is placed along the gravity direction of the box 110, and the opening 1101 of the box is oriented upward. Therefore, the cell module 120 placed inside the cavity 1102 is substantially prevented from moving relative to the box 110.

In this way, at the same-side ends of the cell module and the box along the first direction F1, the cell module 120 is in concave-convex fit with the box 110 by use of a plurality of convex ribs 121 and limiting grooves 111. The cell module 120 can be in concave-convex fit with the box 110 more snugly, and the cell module 120 is more reliably restricted from moving along the second direction F2 and the first direction F1.

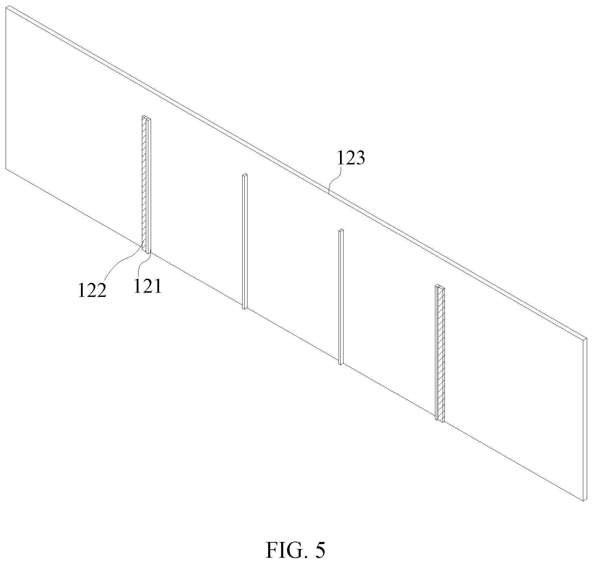

In some embodiments of this application, still referring to FIG. 3, and also referring to FIG. 5, at least one first sealant strip 122 is disposed on two sides of the cell module 120 along the first direction F1 separately. Each first sealant strip 122 is located on one side of a corresponding convex rib 121 along the second direction F2.

As shown in FIG. 3, the second direction F2 is a left-right direction, and the first direction F1 is a front-rear direction. To be specific, at least one first sealant strip 122 is disposed on the front side and the rear side of the cell module 120 separately. Each first sealant strip 122 is located to the left or right side of the corresponding convex rib 121.

When the cell module 120 is in concave-convex fit with the box 110 by means of the convex rib 121 and the corresponding limiting groove 111, the first sealant strip 122 located on a side of a convex rib 121 along the second direction F2 may be made to abut on an outer circumference region of an opening of the corresponding limiting groove 111 along the first direction F1. This ensures a tight fit between the convex rib 121 and the corresponding limiting groove 111, and prevents the glue from overflowing from a fit clearance between the convex rib 121 and the corresponding limiting groove 111 during a potting operation.

In some embodiments, still referring to FIG. 2, the cell module 120 includes two first side plates 123 disposed opposite to each other along the first direction F1. Still referring to FIG. 5, both the convex rib 121 and the first sealant strip 122 are disposed on the first side plate 123 on the same side.

In some embodiments, both the convex rib 121 and the first sealant strip 122 extend from the bottom of the first side plate 123 toward the top of the first side plate 123. A direction in which the bottom of the first side plate 123 points to the top of the first side plate 123 is perpendicular to the plane in which the opening 1101 is located. In this way, the convex rib 121 can be in fit and contact with the corresponding limiting groove 111 more extensively in the direction perpendicular to the plane in which the opening 1101 is located. Moreover, the convex rib 121 can be in closer fit with the corresponding limiting groove 111.

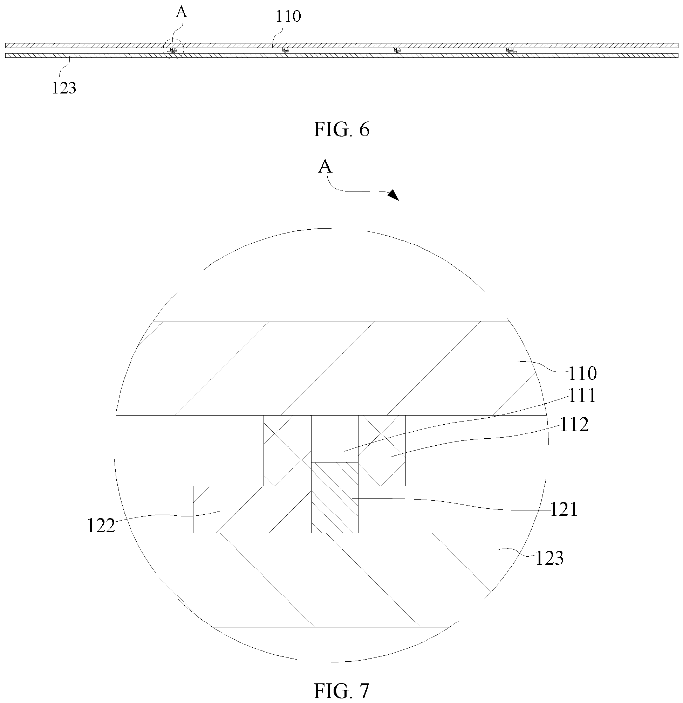

In some embodiments of this application, still referring to FIG. 5, and also referring to FIG. 6 and FIG. 7 together, two first sealant strips 122 are disposed on the two sides of the cell module 120 along the first direction F1 separately. Among a plurality of convex ribs 121 located on the same side of the cell module 120, a first sealant strip 122 is disposed on one side of each of two convex ribs 121 that are located outermost along the second direction F2, and the side of one of the two convex ribs is away from the side of the other convex rib.

To be specific, two first sealant strips 122 are disposed on the front side and the rear side of the cell module 120 separately. The two sealant strips 122 are located to the left side and the right side of the entirety of the same-side convex ribs 121 respectively.

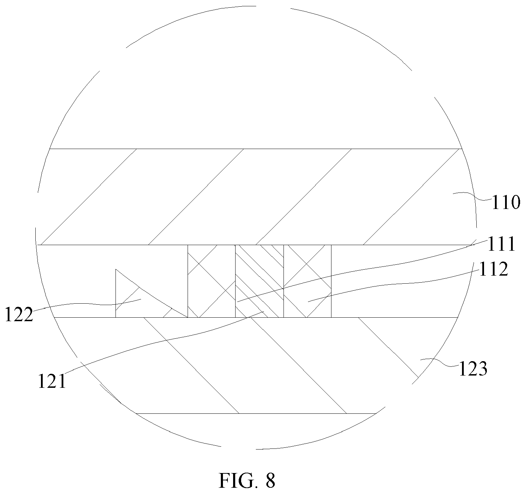

By virtue of the two first sealant strips 122 located to the left side and the right side of the entirety of the same-side convex ribs 121 respectively, all the convex ribs 121 are in tighter fit with the corresponding limiting grooves 111 (as shown in FIG. 8), and the glue is more reliably prevented from overflowing from the fit clearance between the convex rib 121 and the corresponding limiting groove 111 during a potting operation.

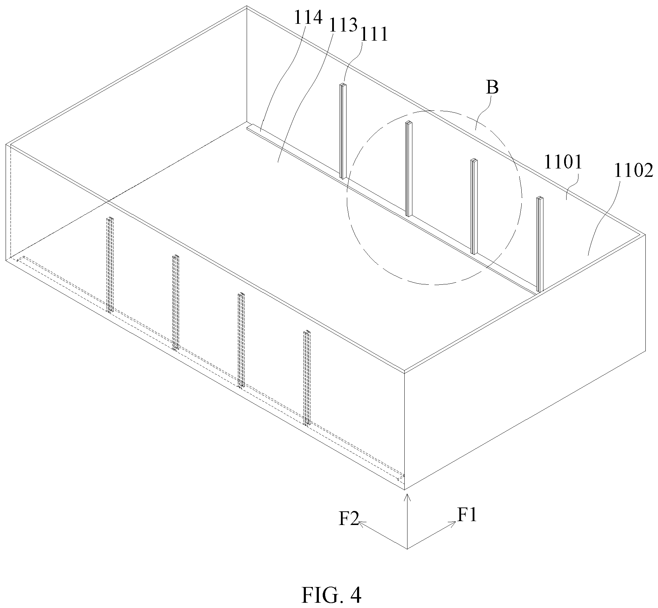

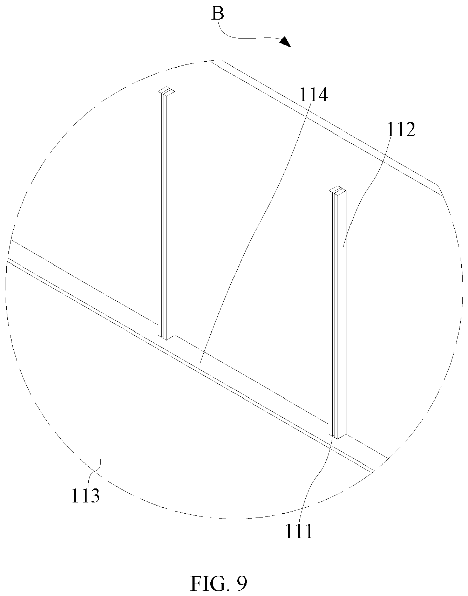

In some embodiments of this application, still referring to FIG. 2 and FIG. 4, and referring to FIG. 9 together, a plurality of limiting convex strip groups are disposed on the inner sidewall of the cavity 1102. Two limiting convex strips 112 in each group of limiting convex strips and the inner sidewall of the cavity 1102 define the limiting groove 111.

In other words, the limiting groove 111 is formed between the two limiting convex strips 112 of the corresponding limiting convex strip group.

The limiting groove 111 formed between the two limiting convex strips 112 of the corresponding limiting convex strip group is in concave-convex fit with the corresponding convex rib 121, thereby positioning and fixing the cell module 120 in the cavity 1102.

In some embodiments, the limiting convex strips 112 are perpendicular to the plane in which the opening 1101 is located. The two limiting convex strips 112 are arranged on the box 110 along the direction perpendicular to the plane in which the opening 1101 is located. As shown in FIG. 2, both limiting convex strips 112 are arranged along an up-down direction. In this way, the limiting groove 111 formed between the two limiting convex strips 112 is also arranged along the up-down direction. The concave-convex fit between the limiting groove 111 and the corresponding convex rib 121 can serve to restrict the cell module 120 from moving along the second direction F2 and the first direction F1.

The limiting convex strip 112 is perpendicular to the plane in which the opening 1101 is located. Therefore, the formed limiting groove 111 is also perpendicular to the plane in which the opening 1101 is located, making it convenient to put the cell module 120 into the cavity 1102 of the box 110 along the direction perpendicular to the plane in which the opening 1101 is located, and in turn, forming a concave-convex fit between the cell module 120 and the box 110.

In some embodiments, if the glue is poured in from a space between the limiting convex strips 112 corresponding to two adjacent limiting grooves 111 among a plurality of limiting grooves 111 on the same side, the two first sealant strips 122 located on the entirety of all the convex ribs 121 respectively can effectively prevent the glue from overflowing from the two sides of the cell module 120 along the second direction F2.

In some embodiments, the outer circumference region of the opening of the limiting groove 111 is a side of the limiting convex strip 112, the side being oriented toward the cell module 120. Still referring to FIG. 8, when the cell module 120 is in concave-convex fit with the box 110 by means of the convex rib 121 and the corresponding limiting groove 111, the first sealant strip 122 located on a side of a convex rib 121 along the second direction F2 may be made to abut on a side of the limiting convex strip 112 along the first direction F1 instead, the side being oriented toward the cell module 120, so as to facilitate a tight fit between the convex rib 121 and the corresponding limiting groove 111.

In some embodiments, the limiting convex strip 112 is of a cuboidal structure. Correspondingly, the limiting groove 111 and the convex rib 121 are also of a cuboidal structure. The dimensions of both the limiting groove 111 and the convex rib 121 along the first direction F1 are equal to 3 to 5 millimeters (mm), so that a distance between the outer circumference of the cell module 120 and the inner circumference of the box 110 along the first direction F1 is equal to 3 to 5 millimeters (mm).

In some embodiments of this application, still referring to FIG. 4, the box 110 includes a bottom plate 113 opposite to the opening 1101. Second sealant strips 114 located between the bottom plate 113 and the limiting groove 111 and arranged along the second direction F2 are disposed at two ends of the bottom plate 113 along the first direction F 1.

To be specific, when the box 110 is disposed along a gravity direction thereof, the opening 1101 is located at the top of the box 110 and the opening 1101 is oriented upward. The bottom plate 113 and the opening 1101 are disposed opposite to each other along the up-down direction. A gap that runs along the up-down direction exists between the bottom plate 113 and the limiting groove 111. The second sealant strip 114 is disposed at the gap.

When the cell module 120 is in concave-convex fit with the box 110 by means of the convex rib 121 and the corresponding limiting groove 111, the second sealant strips 114 disposed along the second direction F2 cause the bottom of the cell module 120 to hermetically abut onto the bottom plate 113 of the box 110 in the direction perpendicular to the plane in which the opening 1101 is located, thereby ensuring a firmer fit between the cell module 120 and the box 110. In addition, if the glue is poured in from a space between the limiting convex strips 112 corresponding to two adjacent limiting grooves 111 among a plurality of limiting grooves 111 on the same side, the second sealant strip 114 can prevent the glue from overflowing from the bottom of the cell module 120.

In some embodiments of this application, a width of the second sealant strip 114 along the first direction F1 is greater than a width of the potting clearance 1103.

In other words, the width of the second sealant strip 114 along the first direction F1 is greater than a distance between the cell module 120 and the box 110 along the first direction F1. As shown in FIG. 1, the width of the second sealant strip 114 along the first direction F1 is greater than a dimension of the potting clearance 1103 along the first direction F1.

In a process of pouring a glue into the potting clearance 1103 from the gap between the cell module 120 and the box 110 along the second direction F2, the second sealant strips 114 can reliably prevent the glue from overflowing from the gap between the cell module 120 and the box 110 along the first direction F1.

In some embodiments, the dimension of the potting clearance 1103 along the first direction F1 is equal to 4 millimeters (mm), and the width of the second sealant strip 114 along the first direction F1 is equal to 5 millimeters (mm), thereby preventing the glue from overflowing out of the potting clearance 1103 through the gap along the first direction F1.

In some embodiments, both the first sealant strip 122 and the second sealant strip 114 are foam double-sided tape. The foam double-sided tape is compressive to some extent and more hermetic, and can prevent overflow of glue more reliably.

In some embodiments, a thickness of the foam double-sided tape is 2 millimeters (mm).

In some embodiments, the battery pack 10 further includes an upper cover disposed at the opening 1101. After completion of the potting operation, the upper cover may be fitted onto the box 110, and the upper cover can close the opening 1101.

An embodiment of this application provides a vehicle, containing the battery pack 10. The vehicle may be an automobile, and the automobile may be an oil-fueled vehicle, a natural gas vehicle, or a new energy vehicle. The new energy vehicle may be a battery electric vehicle, a hybrid electric vehicle, a range-extended electric vehicle, or the like.

The battery pack 10 may be disposed in the vehicle. For example, the battery pack 10 may be disposed at the bottom or front or rear of the vehicle. The cell module 120 of the battery pack 10 may be configured to supply power to the vehicle. For example, the cell module 120 of the battery pack 10 may serve as an operating power supply of the vehicle to power a circuit system of the vehicle, for example, to meet the operating power requirements of the vehicle that is being started, navigated, running.

In another embodiment of this application, the cell module 120 of the battery pack 10 serves not only as an operating power supply of the vehicle, but also as a driving power supply of the vehicle to provide driving power for the vehicle in place of or partly in place of fuel oil or natural gas.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto.

## Claims

1. A battery pack, comprising:
a box (110), containing a cavity (1102) with an opening (1101) on one side; and
a cell module (120), accommodated in the cavity (1102), wherein
a plurality of limiting grooves (111) are spaced apart on an inner sidewall of the cavity (1102), and convex ribs (121) in one-to-one correspondence with and in fit with the limiting grooves (111) are disposed on an outer sidewall of the cell module (120); and
a potting clearance (1103) that communicates with the opening (1101) is defined by a part of the inner sidewall of the cavity (1102) and a part of the outer sidewall of the cell module (120), wherein the part of the inner sidewall of the cavity is configured to avoid the limiting grooves (111), and the part of the outer sidewall of the cell module is configured to avoid the convex ribs (121).

2. The battery pack according to claim 1, wherein the inner sidewall of the cavity (1102) comprises at least two groups of sidewalls opposite to each other; and
the limiting groove (111) is made on at least one group of sidewalls opposite to each other.

3. The battery pack according to claim 1 or 2, wherein a width of the potting clearance (1103) is 3 to 5 mm.

4. The battery pack according to any one of claims 1 to 3, wherein the inner sidewall of the cavity (1102) comprises a first sidewall (115) and a second sidewall (116) disposed opposite to each other along a first direction;
a plurality of the limiting grooves (111) are made on the first sidewall (115) and the second sidewall (116) separately and spaced apart along a second direction;
a plurality of the convex ribs (121) spaced apart are correspondingly disposed on two opposite sides of the cell module (120) separately; and
the first direction and the second direction are perpendicular to each other and both parallel to a plane in which the opening (1101) is located.

5. The battery pack according to claim 4, wherein at least one first sealant strip (122) is disposed on two sides of the cell module (120) along the first direction separately; and
each first sealant strip (122) is located on one side of a corresponding convex rib (121) along the second direction.

6. The battery pack according to claim 5, wherein two first sealant strips (122) are disposed on the two sides of the cell module (120) along the first direction separately; and
among a plurality of convex ribs (121) on a same side, a first sealant strip (122) is disposed on one side of each of two convex ribs (121) that are located outermost along the second direction, and the side of one of the two convex ribs is away from the side of the other convex rib.

7. The battery pack according to any one of claims 1 to 6, wherein a plurality of limiting convex strip groups are disposed on the inner sidewall of the cavity (1102); and
two limiting convex strips (112) in each group and the inner sidewall of the cavity (1102) define the limiting groove (111).

8. The battery pack according to any one of claims 1 to 7, wherein the box (110) comprises a bottom plate (113) opposite to the opening (1101); and
second sealant strips (114) located between the bottom plate (113) and the limiting groove (111) and arranged along a second direction are disposed at two ends of the bottom plate (113) along a first direction.

9. The battery pack according to claim 8, wherein a width of the second sealant strip (114) along the first direction is greater than a width of the potting clearance (1103).

10. A vehicle, comprising the battery pack (10) according to any one of claims 1 to 9.
